Europäisches Patentamt

(19) European Patent Office

Office européen des brevets

(11) Publication number: **0 454 394 A1**

# EUROPEAN PATENT APPLICATION

(12)

(21) Application number: **91303588.7**

(22) Date of filing: **22.04.91**

(51) Int. Cl.⁵: **B60C 11/06**

(30) Priority: **26.04.90 JP 111005/90**

(43) Date of publication of application:
**30.10.91 Bulletin 91/44**

(84) Designated Contracting States:
**DE ES FR GB IT**

(71) Applicant: **Bridgestone Corporation**
**10-1, Kyobashi 1-Chome Chuo-Ku**
**Tokyo 104 (JP)**

(72) Inventor: **Watanabe, Shinichi**
**5-5, Ogawahigashi-Cho 3-Chome**
**Kodaira City, Tokyo (JP)**

(74) Representative: **Whalley, Kevin et al**
**MARKS & CLERK 57/60 Lincoln's Inn Fields**
**London WC2A 3LS (GB)**

(54) **Pneumatic tires.**

(57)    A pneumatic tire (1) has a pair of side walls (3), and a cylindrical tread portion (4) extending between the pair of side walls. The outer surface of the tread portion is provided with three or more circumferentially extending main grooves (20) axially spaced from one another by a given distance, and a number of lug grooves (25) crossing the main grooves at an acute angle and circumferentially spaced from one another by a substantially equal distance. The volume per unit length in a circumferential direction of the tire is made different among a certain main groove and two main grooves positioned on axially opposite sides of this certain main groove.

EP 0 454 394 A1

FIG. 2

The present invention relates to pneumatic tires having tread patterns improved to reduce noises of the tires.

In conventional pneumatic tires, three or more circumferentially extending main grooves having the same depth are usually formed in the outer surface of a tread while the circumferential grooves are spaced from one another in the axial direction by a given distance, and further a number of lug grooves (lateral grooves) are crossed to the main grooves at an acute angle in the outer surface of the tread, while the lug grooves are spaced from one another in the circumferential direction by a substantially equal distance. The axial widths of the main grooves are generally made equal in these pneumatic tires. As the case may be, the widths of the main grooves arranged on one axial side along the equatorial plane of the tire are all made different from one another, and those of the main grooves on the other side along the equatorial plane of the tire are made symmetrical with those of the main grooves on the one axial side of the tire with respect to the equatorial plane of the tire.

However, when such a tire is run on road, noises having a peak at a certain frequency are generated even if a known pitch variation technique is employed in designing a tread pattern. As a result, such a tire is unfavorably judged as a tire generating great tire noises. The reason is as follows:

That is, consider a case where this tire is run on road. When land portions of the tire plane-contact with the road, tunnel-like spaces in which the lug grooves are opened to the circumferential main grooves are formed between a front edge on a treading-in side and a rear edge on a kicking-out side in a ground contact area by the main grooves positioning in the ground contact area. Air inside the tunnel-like spaces resonate (air column resonance) with hitting sounds generated when the land portions hit the road, pumping noises generated when air inside the lug grooves is compressed in the ground contact area, and rapidly discharged outside, or the like. At that time, when the axial widths of the entire main grooves are the same as mentioned above, the resonance frequencies of all these main grooves (tunnels) are equal to one another. Consequently, a very great peak appears at a certain frequency.

The present invention is to provide pneumatic tires which can effectively suppress tire noises without deteriorating other performances such as cornering stability, durability or drainage performance.

The above object can be realized by a pneumatic tire in which a plurality of circumferentially extending main grooves are formed in the outer peripheral surface of a cylindrical tread portion extending between a pair of side walls, while the main grooves are axially spaced from one another by a given distance, and a number of lug grooves are crossed to the main grooves in the outer peripheral surface of the tread portion at an acute angle, while the lug grooves are spaced from the adjacent ones by a substantially equal distance in a circumferential direction, and which pneumatic tire is characterized in that a volume per unit length in the circumferential direction of a certain main grooves and those of two main grooves located adjacent thereto on axially opposite sides thereof, respectively, are made different from one another.

Now, consider that the pneumatic tire according to the present invention is run on road, and hitting noises are generated when the the land portions hit the road or pumping noises are generated when air in the lug grooves is compressed inside the ground contact area, and rapidly discharged outside. At that time, since the land portions inside the ground contact area plane-contact the road, the main grooves in the ground contact area form a kind of tunnel-like spaces opened to the front edge on the treading-in side and the rear edge on the kicking-out side within the ground contact area. Since air inside the tunnel-like spaces functions as air columns, the air may resonate with the above-mentioned noises (air column resonance). However, according to the present invention, since the volume per unit length in the circumferential direction of a certain main groove and those of the two main grooves located on the axially opposite sides thereof, respectively, are all made different from one another, the volumes of the tunnel-like spaces formed by these three main grooves are all different from one another. As a result, the resonance frequencies of at least these three tunnel-like spaces are different from one another. By so doing, the peak in the case of the air column resonance is dispersed among a plurality of frequencies, so that the noises are suppressed. Thus, the tire is judged as a tire causing a small amount of noises. The axial widths of the other main groove or grooves may be identical with that of either one of the above three main grooves, but a conspicuous noise-suppressing effect can be obtained when the axial widths of the other groove or grooves differ from that of the above three main grooves.

These and other objects, features and advantages of the invention will be appreciated upon reading of the following description of the invention when taken in conjunction with the attached drawings, with the understanding that some modifications, variations and changes of the same could be made without departing from the spirit of the invention or the scope of claims appended hereto.

For a better understanding of the invention, reference is made to the attached drawings, wherein:

Fig. 1 is a sectional view of a pneumatic tire as one embodiment of the present invention along a meridian line; and

Fig. 2 is a developed view of a part of a tread portion of Fig. 1.

In the following, one embodiment according to the present invention will be explained with reference to the attached drawings.

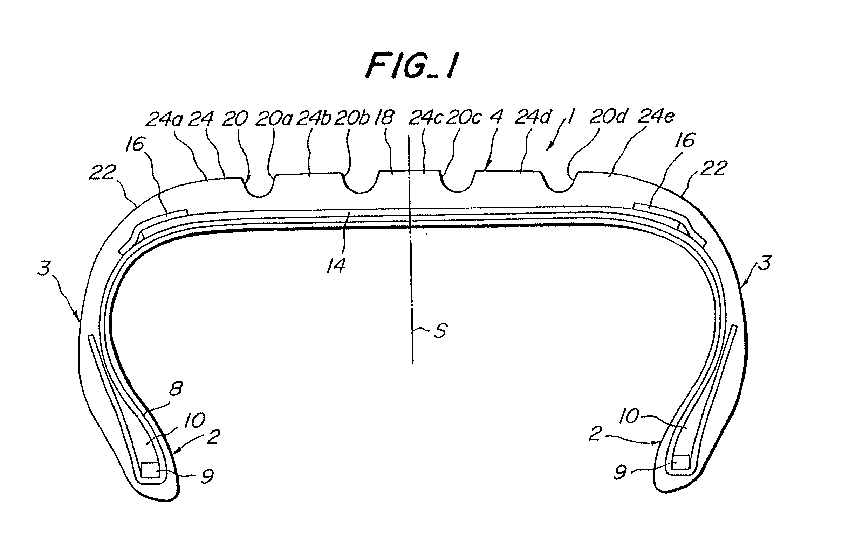

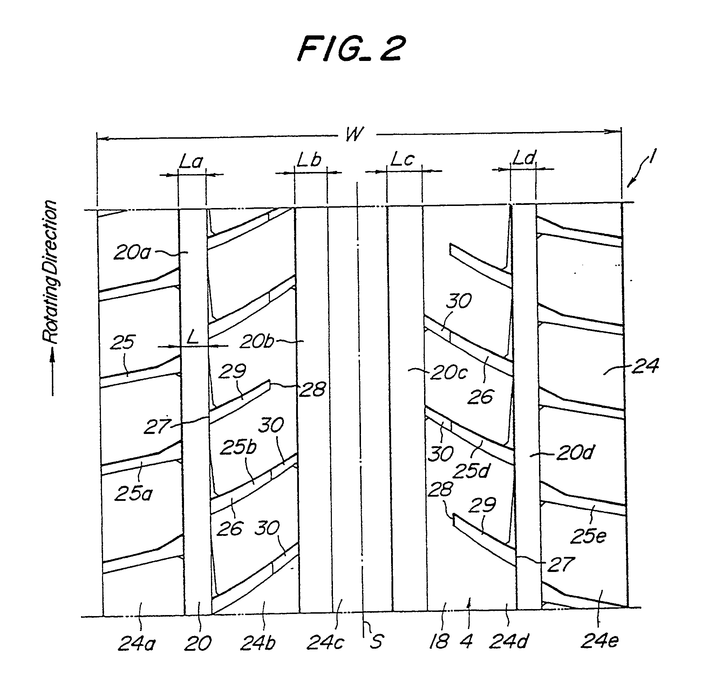

In Figs. 1 and 2, a reference numeral 1 denotes a pneumatic tire to be used to run at high speeds. In this embodiment, the tire has the tire size of 245/45ZR16, and involves a pair of bead portions 2, a pair of side walls 3 extending radially outwardly from these bead portions 2, respectively, and a cylindrical tread portion 4 extending between the opposite side walls 3. The tire 1 is reinforced with a toroidal carcass layer 8 extending from one of the bead portions 2, 2 to the other bead portion 2. Each of the opposite end portions of the carcass layer 8 is turned up around a bead ring 9 and a rubber filler 10 from the axially inner side to the axially outer side. The carcass layer 8 is constituted by at least one carcass ply, and a number of cords are buried in this carcass ply, extending in a substantially radial direction. A belt layer 14 is provided on a radially outer side of the carcass layer 8. This belt layer is constituted by piling at least two plies having non-extensible cords buried therein. The cords buried in these belt plies are inclined to cross the equatorial plane S of the tire at an angle of 15-35°, and the cords in one ply are reversely inclined and crossed to those in the adjacent ply. A reference numeral 16 is a reinforcing layer covering each of at least axially opposed end portions of the belt layer 14. This reinforcing layer 16 is constituted by at least one reinforcing ply having thermally shrinkable cords buried therein, and these cords are arranged substantially in parallel with the equatorial plane S of the tire. A tread 18 is arranged in the tread portion 4 radially out side the belt layer 14 and the reinforcing layers 16.

Three or more, but six at the most (four in this embodiment) parallel linear main grooves 20 (20a, 20b, 20c, 20d) are formed in the tread 18, while the main grooves are spaced from adjacent ones by a given distance in the rotational axis direction of the tire 1. These main grooves 20 extend continuously in the circumferential direction and substantially parallel with the equatorial plane S of the tire, and have large axial widths L for mainly exhibiting drainage performance of the tire 1. Therefore, sipes having a width of 0.5 mm to 2.0 mm or relatively narrow auxiliary grooves having a similar groove width are not regarded as the main grooves 20. In the present invention, the volume per unit length in the circumferential direction of a certain main groove 20 and those of two main grooves 20 located adjacent to this certain main groove 20 on the axially opposite sides thereof, that is, the volumes of the adjacent three main grooves 20, are all made different from one another. In this embodiment, the axial widths L (La through Ld) of all the main grooves 20a, 20b, 20c and 20d are made different from one another. By so doing, the volumes per unit length in the circumferential direction of at least three adjacent main grooves 20 are all made different from one another. As a result, when these main grooves 20 come into the ground contact area, the resonance frequencies of the tunnel-like spaces defined by these main grooves 20 (all the main grooves 20 in this embodiment) are all different from one another. Thus, the peak of the resonance frequency of the air column is dispersed so that noises can be effectively suppressed. In addition, when the axial width L of a certain main groove 20 and those L of two main grooves 20 adjacent to this certain main groove 20 on the axially opposite sides thereof are all made different from one another as mentioned above and if the tire is run on a road on which a number of so-called rain grooves, i.e., a number of narrow and shallow grooves are formed at a equal interval, extending in a longitudinal direction, to improve drainage performance of the road, reaction forces received from the rain grooves are different among at least these three main grooves 20. Consequently, the trouble that a handle is unintentionally moved by the rain grooves can be prevented. When the volume of the main groove 20 with the volume per unit length in the circumferential direction being the maximum (determined by the axial width L in this embodiment) is taken as 100, it is preferable that the volume of the main groove with the volume per unit length in the circumferential direction being the minimum (determined by the axial width L) is in a range of 65-95. The reason is that if the value is less than 65, the volume of the corresponding main groove 20 becomes smaller to deteriorate drainage property. To the contrary, if it it more than 95, the peak frequencies approach to each other, so that noise-reducing effect is deteriorated. It is more preferable that the volume of the main groove 20 having the minimum volume per unit width is in a range of 75-85. In this embodiment, the depth of all the main grooves 20 is set at a constant value of 8.4 mm, and the axial widths La, Lb, Lc and Ld of the main grooves 20a, 20b, 20c and 20d, respectively are set at 10.7 mm, 12.8 mm, 13.3 mm, and 10.5 mm. The sum of the axial widths L of all the main grooves 20 is preferably in a range of 15%-30% of the width W of the tread (W=110 mm in this embodiment). The reason is that if it is less than 15%, the drainage property is deteriorated, while if it is more than 30%, the area of the land portions becomes smaller to deteriorate durability of the tire. The sum of the axial widths L of the main grooves 20 is more preferably in a range of 20%-25% of the width W of the tread.

When four main grooves 20 are formed in the tread 4 as mentioned above, plural rows (five rows in this embodiment) of land portions 24 (24a, 24b, 24c, 24d) are formed among the adjacent main grooves 20 and the opposite edges 22 of the tread, while continuously extending in the circumferential direction. A plurality of lug grooves 25a, 25e, 25b and 25d are formed in the rows of the external land portions 24a and 24e nearest to the edges 22 of the tread, and in the rows of the intermediate land portions 24b and 24d arranged between a row of the central land portion 24c provided along the equatorial plane S of the tire and the rows of the external land portions 24a, 24e. These lug grooves obliquely transverse across the land portions. No lug grooves are formed in the central row of the land portion 24c arranged along the equatorial plane S of the tire. As a result, the row of the land portion 24c is continued in the circumferential direction without being cut. The lug grooves 25a and the lug grooves 25e are spaced from adjacent ones by a substantially equal distance in the circumferential direction (arranged in the substantially equal distance in the circumferential direction). In this embodiment, in order to more effectively reduce noises, a known pitch variation is employed. The depth of these lug grooves 25a, 25e, 25b and 25d is made equal to or slightly smaller than that of the main grooves 20. The lug grooves 25a and 25b arranged on one side of the equatorial plane S of the tire are displaced by about 1/2 of the pitch from the lug grooves 25d and 25e on the other side of the equatorial plane S of the tire. The lug grooves 25a, 25e, 25b and 25d are arranged in a herringbone pattern in which the lug grooves are inclined forwardly in the rotational direction of the tire 1 from the edge 22 of the tread toward the equatorial plane S of the tire to improve the drainage property. By so doing, the lug grooves 25 cross the main grooves 20 at an acute angle. However, this herringbone pattern in which the lug grooves are inclined in one direction on each of the opposite sides of the equatorial plane is not indispensable for the present invention. Further, in this embodiment, in order to further reduce noises by forming the land portions continuously in the circumferential direction, the lug grooves 25b and 25d in the rows of the intermediate land portions 24b and 24d are constituted by two kinds of lateral grooves 26 and halfway grooves 29. The lateral groove 26 opens to the main grooves 20a, 20b, 20c, 20d at opposite ends. The intermittent groove 29 opens to the main groove 20a, 20d at one end 27 on the side of the tread edge, while the other end 28 on the side of the equatorial plane S of the tire terminates on midway in the axially width direction of the intermediate land portion 24b, 24d. The lateral grooves 26 are positioned on the circumferentially opposite sides of the midway groove 29. As a result, since the midway grooves 29 do not axially transverse the land portion, the circumferential length of the land portion including the midway groove 29 is about twice as large as that of the land portion not including the midway groove. The land portions containing the midway grooves 29 and those containing no midway grooves 29 are alternatively arranged in each of the rows of the intermittent land portions 24b and 24d in the circumferential direction. On the other hand, as mentioned above, the rows of the external land portions 24a and 24e are divided by the transverse grooves 25a and 25e, respectively. It may be that a plurality of rows of land portions in which land portions containing midway grooves 29 and land portions containing no midway grooves 29 are alternatively circumferentially placed as in the case of the intermediate land portions 24b and 24d are arranged between the row of the central land portion and each of the rows of the external land portions. Since any of the lug groove 25 communicates with any of the main grooves 20, the volumes of the tunnel-like spaces defined by the main grooves 20a, 20b, 20c and 20d on contacting the ground are further varied so that the peak frequency of the air column resonance is further dispersed. Furthermore, a platform 30 is formed at that end portion of the transverse groove 26 which is nearer to the equatorial plane S of the tire. This platform projects radially outwardly from the bottom of the transverse groove 26 by a height smaller than the depth of the transverse groove 26. By providing the platform 30 in the transverse groove 26, the main grooves 20b and 20c on the central side have those openings to the main grooves of which sectional area is different from that of the external main grooves 20a, 20d, so that the peak frequency of the air column resonance is more assuredly dispersed.

Next, test examples will be explained. In these tests, test tires and conventional tires were prepared. The test tire had a tread pattern as shown in Figs. 1 and 2, and the conventional tire had the same construction as that of the test tire except that the widths L of all main grooves were equally 11.8 mm.

Then, each of the test tire and the conventional tire was run on a drum having a diameter of 1.7 m at an initial speed of 200 km/h in the state that an internal pressure of 3.1 kg/cm$^2$ was applied to the tire under application of a load of 400 kgf. The speed was raised by 10 km/h every passage of ten minutes. The tire was run until it was broken. Durability of the test tire was determined by expressing the speed at the time of the breakage of the conventional tire as 100. As a result, the indexes of the conventional tire and the test tire were both 100. Thus, the durability at high speeds of the test tire was not deteriorated as compared with the conventional tire. The speed for the index of 100 was actually 280 km/h.

Further, after each of the test tire and conventional tire was inflated at an internal pressure of 3.1 kg/cm$^2$ and fitted to a test car, it was run on a wet road, and its cornering stability was determined in the wet state based on a lap time and driver's feeling. When results are evaluated by indexes, both indexes of the test tire and the conventional tire were 100, which reveals that the cornering stability on the wet road is the same between the test tire and the prior art tire.

Furthermore, after each of the test tire and the conventional tire was inflated at an internal pressure of 3.1 kg/cm$^2$ and fitted to the test car, the tire was run in a pool having a water depth of 10 mm formed in a turning course having a radius of 100 mm at a speed of 70 km/h. Variations in the lateral acceleration occurred at that time were measured, and drainage property was determined. When results were evaluated by indexed, indexes of both the conventional tire and the test tire were 100, and the drainage property of the test tire was not inferior to that of the prior art tire. The result for the index being 100 was 0.45 g (g: gravitational acceleration).

Further, after each of the test tire and the conventional tire was inflated at an internal pressure of 3.1 kg/cm², the tire was pressed to the drum under application of a load of 400 kgf. Then, the tire was drifted zigzag on the drum from a speed of 120 km/h, and noises generated were collected by a microphone until the speed was dropped to 20 km/h. Then, sound pressure levels at peak frequencies were determined. When results were evaluated by indexes, the indexes of the conventional tire and the test tire were 100 and 96, respectively, which reveals that the noises were assuredly reduced by the test tire.

In the above example, the volumes of the main grooves 20 per unit length in the circumferential direction were varied among at least totally three main grooves 20 consisting of a certain main groove 20 and main grooves 20 adjacent to this certain main groove 20 by making the axial widths of these main grooves 20 different from one another. According to the present invention, the volumes of the main grooves per unit length in the circumferential direction may be made different from one another by making the depths of the main grooves different from one another. In the above embodiment, the axial widths L of the main grooves 20 are varied irrespective of the axial locations thereof. However, according to the present invention, the axial widths L of the main grooves 20 may be gradually increased from the axially outer side to the axially inner side when the tire is fitted to a vehicle, so that the negative ratio of the axially inner side from the equatorial planes of the tire may be greater than that of the axially outer side.

As mentioned above, according to the present invention, the noises of the tires can be effectively suppressed without deteriorating other performances such as cornering stability, durability, and drainage property.

## Claims

1. A pneumatic tire (1) comprising a pair of side walls (3), and a cylindrical tread portion (4) extending between the pair of side walls, the outer surface of said tread portion being provided with three or more circumferentially extending main grooves (20) axially spaced from adjacent ones by a given distance and a number of lug grooves (25) crossing said main grooves at an acute angle and circumferentially spaced from adjacent ones by a substantially equal distance, characterized in that a volume per unit length on the circumferential direction of the tire is made different among a certain main groove and two main grooves positioned on axially opposite sides of said certain main groove .

2. A pneumatic tire as claimed in Claim 1, characterized in that the volumes of all the main grooves (20) per unit length in the circumferential direction are different from one another.

3. A pneumatic tire as claimed in Claim 1 or 2, characterized in that, when the volume of the main groove having a maximum volume per unit length in the circumferential direction is taken as 100, the volume of the main groove having a minimum volume per unit length in the circumferential direction is 65-95, preferably 75-85.

4. A pneumatic tire as claimed in any of Claims 1 to 3, characterized in that a sum of axial widths (L) of the main grooves (20) is in a range of 15% to 30%, preferably 20% to 25%, of the width of the tread.

5. A pneumatic tire as claimed in any of Claims 1 to 4, characterized in that a plurality of rows of land portions (24) are defined by the main grooves (20), and a plurality of lug grooves (25) obliquely traverse rows of intermediate land portions (24b, 24d) each defined between rows of external land portions (24a, 24e) nearest to edges of the tread and a central land portion (24c) provided along and containing the equatorial plane (S) of the tire.

6. A pneumatic tire as claimed on Claim 5, characterized in that the lug grooves are arranged in a herringbone pattern.

7. A pneumatic tire as claimed in Claim 5 or 6, characterized on that the lug grooves (25b; 25d) on the intermediate land portion (24b; 24d) consist of transverse grooves (26) open to the main grooves (20) at axially opposite ends, and midway grooves (29) having one end (27) at the side of the tread edge open to the main groove (20a; 20d) and the other end (28) at the side of the equatorial plane (S) of the tire terminating midway of the intermediate land portion (24b; 24d).

8. A pneumatic tire as claimed in Claim 8, characterized in that land portions containing the midway grooves (29) and those containing no midway grooves are alternatively arranged in the row of the land portion (24b, 24d) in the circumferential direction of the tire.

9. A pneumatic tire as claimed in any of Claims 7 to 9, characterized in that a platform (30) is formed on a bottom of the transverse groove (26) at that end portion which is nearer to the equatorial plane (S) of the tire, said platform projecting radially outwardly from the bottom of the transverse groove by a height smaller than the depth of the transverse groove.

# FIG_1

EP 0 454 394 A1

# FIG. 2

**European Patent Office**

## EUROPEAN SEARCH REPORT

Application Number

| DOCUMENTS CONSIDERED TO BE RELEVANT | | | EP 91303588.7 |
|---|---|---|---|
| Category | Citation of document with indication, where appropriate, of relevant passages | Relevant to claim | CLASSIFICATION OF THE APPLICATION (Int. Cl.5) |
| X | <u>EP - A1 - 0 175 829</u><br>(THE GOODYEAR TIRE & RUBBER COMPANY)<br>   * Abstract; fig. 1; page 7, lines 20-24 * | 1 | B 60 C 11/06 |
| P,X | <u>EP - A2 - 0 402 595</u><br>(THE UNIROYAL GOODRICH TIRE COMPANY)<br>   * Abstract; fig. 1,3; column 5, lines 16-29 * | 1,2 | |
| A | <u>DE - A1 - 3 522 967</u><br>(FORSCHUNGSINSTITUT FÜR KRAFTFAHRWESEN UND FAHRZEUGMOTOREN STUTTGART -FKFS)<br>   * Fig. 1; column 6, line 60 - column 7, line 9 * | 1,5,6 | |
| A | <u>DE - A1 - 3 424 796</u><br>(THE YOKOHAMA RUBBER CO. LTD.)<br>   * Abstract * | 1 | TECHNICAL FIELDS SEARCHED (Int. Cl.5)<br><br>B 60 C |

The present search report has been drawn up for all claims

| Place of search | Date of completion of the search | Examiner |
|---|---|---|
| VIENNA | 28-06-1991 | WIDHALM |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

   & : member of the same patent family, corresponding document

EPO FORM 1503 03.82 (P0401)